# EUROPEAN PATENT APPLICATION

(11) **EP 0 568 328 A2**
(43) Date of publication of application: **03.11.1993**
(21) Application number: 93303300.3
(22) Date of filing: 28.04.1993
(51) Int. Cl.: G11B 33/04

(54) **Compact disk rack**

(30) Priority: 29.04.1992 GB 9209271
(71) Applicant: TIN HORSE DESIGN LIMITED, London EC2A 4QP (GB)
(72) Inventor: Lamb, John David, GB-London N4 2JZ (GB); Myerson , David Paul, GB-London W12 8JW (GB); Bunce, Martin Christopher, GB-London N4 2BB (GB); Bicknell, David Huw, Longstowe, Cambridge CB3 7UG (GB)
(74) Representative: Colgan, Stephen James

(57) **Abstract**

The invention provides modules for assembly into a modular compact disk rack. Each module comprises a substantially planar base in the form of a symmetrical web (1) and at least one support (4) fixed to the base. Connecting means are provided on the top and bottom of the supports (4) to connect with complementary connecting means on adjacent modules in the rack. Each module expands the storage capacity of the compact disk rack by exactly one compact disk. The modules preferably comprise abutment means (8) and guide means (7) to define one or more directions along which compact disks may be inserted into the assembled rack.

## Description

The present invention relates to modular racks for storing compact disks, and in particular to modules for assembling into such racks.

In recent years there has been enormous growth in the popularity of compact disk (CD) sound recordings, particularly recordings of music for domestic enjoyment. As the price of CD sound recordings has come down, typical users have amassed large collections of CD's and there now exists a demand for improved CD racks for the storage of those collections.

CD sound recordings are normally protected when not in use by keeping them in hinged plastic boxes. Single disks are kept in standard boxes of approximate dimensions 14.2cm x 12.4cm x 1.0cm. Here and hereafter in this specification all references to CD's are references to storage boxes for CD's and not to the sound recording disks contained therein. The boxes are quite thin, and so can carry only a limited amount of information on their edge. It is thus desirable to store the CD's in a rack which permits easy removal for inspection of the front of the CD, where most information about the recording is to be found. It is also desirable that the CD rack should be inexpensive, adaptable to any size of CD collection, robust and simple to use. It is advantageous if the CD rack permits some classification of the stored CD's according to their type of music or the name of the recording artist, etc.

Accordingly, it is an object of the present invention to provide a compact disk rack having all of the above advantages. It is a particular object of the present invention to provide a modular compact disk rack such that addition of one standard module to the rack permits the storage of one additional CD in the rack.

The present invention provides a compact disk rack module for interlocking with similar modules to provide a compact disk rack, wherein the module comprises:
a symmetrical web having substantially planar upper and lower surfaces;
one or more supports fixed to the symmetrical web; and
connecting means provided on the top and bottom of the supports to connect with complementary connecting means on adjacent modules in the assembled rack, and wherein each module increases the storage capacity of the assembled rack by exactly one compact disk.

The term "symmetrical" implies that the web forming the base of the module has the symmetry of a regular polygon such as an equilateral triangle, a square or a regular hexagon. Preferably, there are at least two supports. Where there are more than two supports, these are preferably positioned at vertices of a regular polygon defined by corners of the symmetrical web. Preferably, there are three, four or six supports arranged at the vertices of an equilateral triangle, a square, or a regular hexagon. The connecting means is preferably simply a stud on the top or bottom of each support which engages with a mating socket on the bottom or top of a support on an adjacent module. Alternatively, the connecting means may for example be a snap fitting, thistle cloth, a pressure sensitive adhesive, a magnet, a screw fitting or a rivet. The compact disk rack module according to the present invention preferably also comprises abutment means associated with the upper surface of the module to restrict the motion of a compact disk inserted into an assembled compact disk rack. Preferably, the module also comprises guide means to define one or more directions along which the compact disk may be inserted into the assembled rack. The module may be formed from wire, wood, metal or plastics by any standard forming technique. However, the module is preferably injection moulded in one piece out of a thermoplastic such as polystyrene or acrylonitrile butadiene styrene (ABS).

The present invention also provides a modular CD rack comprising a plurality of modules as above connected together in a rack. The underside of the module may be equipped with feet, such as rubberised feet

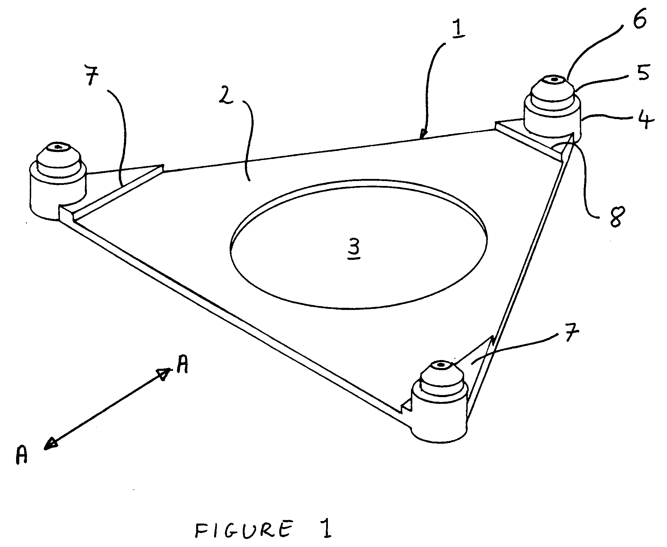

An embodiment of the present invention will now be described further, by way of example, with reference to the accompanying drawings, in which:-
FIGURE 1 shows an isometric projection of a CD rack module according to the invention, viewed from above;
FIGURE 2 shows an elevation view of the module of Figure 1 viewed along the direction of arrow AA;
FIGURE 3 shows a cross-section through one of the supports, the cross-section being taken along a line parallel to one of the sides of the base; and
FIGURE 4 shows an isometric projection of a compact disk rack assembled from three modules according to the invention.

Referring to the drawings, the module is injection moulded in one piece out of a thermoplastic. The module comprises a triangular web 1 having a substantially planar upper surface 2 on which the CD rests when the module is in use. An aperture 3 is provided in the web 1 in order to reduce the weight of thermoplastic used in the module, and consequently reduce the weight and expense of the module. The aperture 3 also allows the user of the rack in some circumstances to look through the aperture and see some information on the front of the CD stored in a module directly below this one in the rack.

The web 1 is shaped as an equilateral triangle and at the vertices of the triangle are three supports 4. The supports are substantially cylindrical in shape. Cylindrical studs 5 having frusto-conical tips 6 protrude from the top of the supports 4. Complementary recesses 17 are situated in the bottom of the supports 4. Holes 28 are provided in the centre of the frusto-conical tips 6. Finally, abutment means 8 and two guide means 7 are provided around the top surface 2 of the web 1. When the module is in use, the rectangular CD rests on the upper surface 2 with three edges of the CD abutting the abutment means 8 and two guide means 7. The only direction in which the CD can slide parallel to and in contact with the upper surface 2 is directly away from abutment means 8 and parallel to guide means 7.

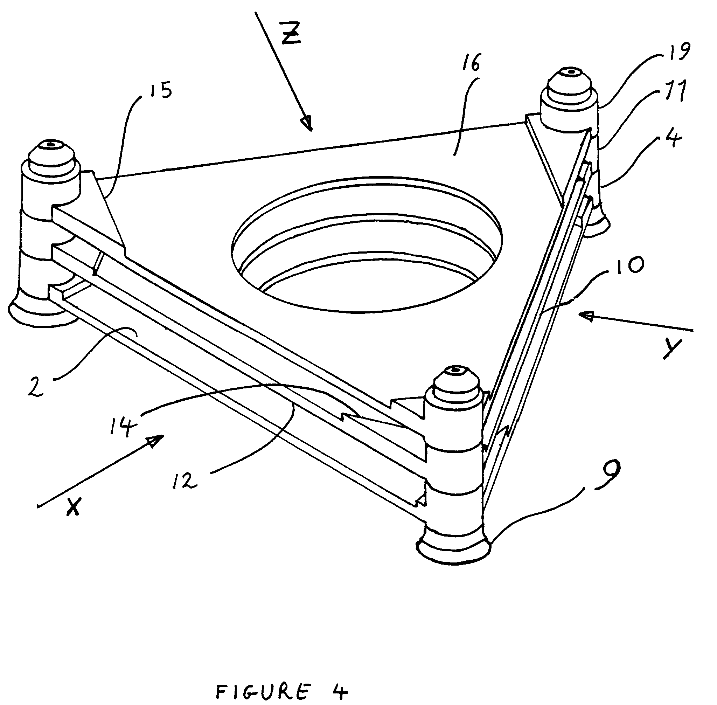

A plurality of the modules according to this embodiment can be assembled into a CD rack as shown in Figure 4. A first module is placed on a substantially flat and horizontal surface. This module will form the base of the rack and is provided on its underside with separate rubberised feet 9 which locate within the recesses 17 and prevent slipping on the substantially flat and horizontal surface. A second module 10 is positioned over the first module with the supports 11 of the second module directly above the supports 4 of the first module. The second module is lowered until the studs 5 on the top of the supports 4 of the first module are fully engaged in the sockets in the underside of the supports 11 of the second module 10. The separation between the upper surface 2 of the web 1 of the first module and the bottom surface 12 of the web 1 of the second module 10 then provides a slot into which a CD can be inserted by sliding it flat and horizontally, endways on, between the guide means 7 in the direction of the arrow X. The two guide means 7 thus define a unique direction along which the CD may be inserted into the slot formed between the first and second modules.

Third 16 and subsequent modules defining second and subsequent CD slots may be added to the rack by simple stacking as above. A stack of N modules will define N-1 slots for the insertion of CD's. Such a rack permits the storage of N CD's, since N-1 CD's will fit into the slots in the rack and the N'th CD can rest on the upper surface of the top module of the rack.

A particularly useful feature of the compact disk rack modules according to the present invention is that they enable the storage capacity of the modular compact disk rack to be built up one compact disk at a time, by adding one module at a time. In this way the capacity of the rack can be matched exactly to the size of the collection to be stored. Because the capacity of the rack is built up one CD at a time, the cost of extending the rack is directly proportional to the amount of extra storage capacity needed.

Another particularly useful feature of the compact disk rack modules according to the present invention is provided by the symmetrical shape of the web 1 that forms the base of the module. This symmetrical shape confers great stability and resistance to torsion, bending or tipping of CD racks formed from stacks of the modules. In these respects the symmetrical shape of the web 1 has been found to provide substantially stronger and more stable stacks than modules having U-shaped, channel-shaped or indented webs forming the base.

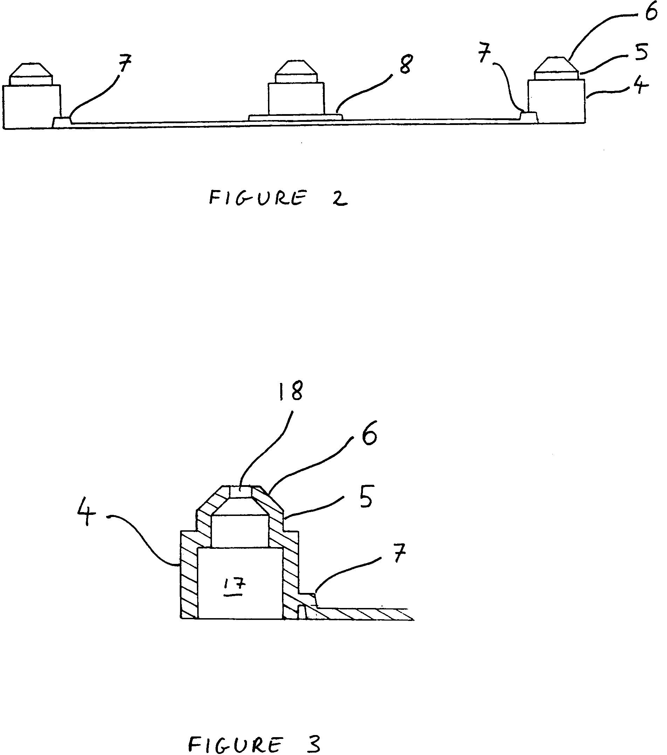

Another particularly useful feature of this embodiment of the invention is that there are three possible directions in which the guide means 7, 14, 15 of successive layers may be aligned. This is a consequence of the fact that the supports 4, 11 are located at the vertices of an equilateral triangle. Thus, the guide means 14 of the second module referred to above may be aligned parallel to the guide means 7 of the first module, or may be aligned at 120° clockwise or anti-clockwise relative to the guide means 7 of the first module. Thus there are three directions X, Y and Z separated by an angle of 120° which may be the unique direction along which CD's can be inserted into the slot formed between the second and third modules. Figure 3 shows the case where the guide means 14 of the second module are aligned at an angle 120° anticlockwise relative to the guide means 7 of the first module and the guide means 15 of a third module 16 are aligned at an angle 120° clockwise relative to the guide means 7. The effect of having three possible alignments for the guide means 7, 14, 15 is that, for example, a collector using a modular compact disk rack built up of modules according to this embodiment can stack the modules such that compact disks in three different categories are inserted into the rack along three different directions X, Y and Z shown in Figure 4, thereby making it easier to locate and retrieve compact disks in a particular desired category.

As the compact disk rack grows it may be desirable to strengthen the rack by passing a reinforcing rod through the holes 18 in the successively stacked supports 4, 11, 19 and securing the reinforcing rod in that position by screws, bolt fittings or the like.

It will readily be appreciated that other embodiments of the present invention similar to this one may be made with four, five or six supports arranged at the vertices of a square, regular pentagon or regular hexagon. With suitable guide means and abutment means four, five or six directions along which compact disks can be inserted may be defined in stacks of these modules.

Instead of rubberised feet, the first module may be provided with feet equipped with suction caps or magnetic feet so as to secure the first module to the surface on which it is placed. Alternatively, or additionally, it may be advantageous to support module racks according to this embodiment rotatably so as to enable the user to select compact disks inserted along different directions.

The modules are preferably shaped and configured to form a rack for standard compact disks having dimensions of approximately 14.2cm x 12.4cm x 1.0cm. The slots formed between the modules in the assembled rack are just wide enough to admit such a standard compact disk. However, the modules are not limited to these dimensions but may, for example, comprise longer supports so as to enable the rack to accommodate larger compact disk boxes, such as those containing two or more recording disks. The longer supports may be formed integrally with the rest of the module for example by injection moulding. Alternatively, the longer supports may be built up from a standard module by connecting extension pieces (spacers) to the top or bottom of the supports of a standard module.

The modules, rubberised or otherwise equipped feet, reinforcing rods and the extension pieces may conveniently be packaged together in a kit for assembly by the user. The user may then buy additional modules as necessary to house a growing collection of CD's by extending the rack.

The above embodiment is intended to be illustrative only. Many other embodiments falling within the scope of the present invention as defined in the accompanying claims will be apparent to persons skilled in the art.

## Claims

1. A compact disk rack module for interlocking with similar modules to provide a modular compact disk rack, which module comprises:
a symmetrical web (1) having substantially planar upper (2) and lower surfaces;
one or more supports (4) fixed to the symmetrical web (1); and
connecting means provided on the top and bottom of the supports (4) to connect with complementary connecting means on adjacent modules in an assembled rack, and wherein each additional module increases the storage capacity of the assembled rack by exactly one compact disk.

2. A compact disk rack module according to claim 1 wherein there are at least two supports (4).

3. A compact disk rack module according to claim 1 or 2 wherein there are at least three supports positioned at vertices of a regular polygon defined by corners of the symmetrical web.

4. A compact disk rack module according to claim 3 wherein the supports (4) are positioned at the vertices of an equilateral triangle, a square, or a regular hexagon.

5. A compact disk rack module according to any preceding claim wherein the connecting means comprises, disposed transversely to the base, a stud (5) on the top or bottom of each support (4) and a complementary mating socket (17) on the bottom or top of each support (4).

6. A compact disk rack module according to any of claims 1 to 4 wherein the connecting means is a snap fitting or thistle cloth or a pressure-sensitive adhesive or a magnet.

7. A compact disk rack module according to any preceding claim further comprising abutment means (8) associated with the upper surface (2) of the module to restrict the motion of a compact disk inserted into an assembled compact disk rack.

8. A compact disk rack module according to any preceding claim further comprising guide means (7) associated with the upper surface of the module to define one or more directions along which the compact disk can be inserted into the assembled compact disk rack.

9. A compact disk rack module according to claim 7 or 8 wherein the abutment means (8) and/or the guide means (7) is a lip formed integrally with the symmetrical web (1) and extending above the upper surface (2) of the symmetrical web (1).

10. A modular compact disk rack comprising an interlocked plurality of compact disk rack modules according to any preceding claim.

11. A kit for assembly into a modular compact disk rack comprising a plurality of compact disk rack modules according to any of claims 1 to 9.
